# EUROPÄISCHE PATENTSCHRIFT

(11) **EP 0 508 082 B1**
(45) Veröffentlichungstag und Bekanntmachung des Hinweises auf die Patenterteilung: **31.05.1995**
(21) Anmeldenummer: 92103328.8
(22) Anmeldetag: 27.02.1992
(51) Int. Cl.: B65B 35/54, B65G 47/68

(54) **Vorrichtung zum Transportieren von Gegenständen in eine Fördereinrichtung einer Verpackungsmaschine**
Device for conveying objects in a conveying plant of a packaging machine
Dispositif de transport d'objets dans une installation de transport d'une machine d'emballage

(30) Priorität: 12.04.1991 DE 4111899
(43) Veröffentlichungstag der Anmeldung: 14.10.1992
(73) Patentinhaber: ROBERT BOSCH GMBH, 70442 Stuttgart (DE)
(72) Erfinder: Lade, Guenther-Eberhard, Dipl.-Ing., D-73663 Berglen (DE); Leypold, Helmut, D-71254 Ditzingen (DE)

(56) Entgegenhaltungen:
- GB-A- 1 223 172

## Beschreibung

### Stand der Technik

In einer Verpackungsanlage, bei der mehrere Produktions- oder Gebermaschinen, beispielsweise Beutel- oder Einwickelmaschinen, eine Hochleistungs-Verpackungsmaschine, beispielsweise eine Kartoniermaschine, beschicken, deren Ausbringung die einer einzigen Gebermaschine übersteigt, sind der Produktfördereinrichtung der Verpackungsmaschine mehrere Bereitstellungseinrichtungen zugeordnet, welche die von den Gebermaschinen herangebrachten, zu verpackenden Gegenstände bereitstellen, welche dann von Überführungseinrichtungen mit Mitnehmern in die Aufnahmebecher der kontinuierlich laufenden Produktfördereinrichtung der Verpackungsmaschine gebracht werden. Eine solche aus der US-PS 4 854 440 bekannte Verpackungsanlage hat vier Überführeinrichtungen, denen je eine Bereitstellungseinrichtung zugeordnet ist und von denen jeweils dieselbe Überführeinrichtung den jeweils gleich angeordneten Aufnahmebecher einer Vierergruppe der Fördereinrichtung mit einem Gegenstand beschickt. Ferner sind bei einer Verpackungsanlage (DE-Patentanmeldung P 40 11 519.4, die nach dem Prioritätsdatum des gegenwärtigen Patents veröffentlicht worden ist) zwei Überführeinrichtungen mit je zwei Bereitstellungseinrichtungen angeordnet, deren Mitnehmer ebenfalls gleichzeitig jeweils vier bereitgestellte Gegenstände an vier verschiedenen Stellen in die Produktbecher der Fördereinrichtung einbringen. Bei diesen bekannten Verpackungsanlagen erstreckt sich die Fördereinrichtung der Verpackungsmaschine unter allen hintereinander angeordneten Überführ- und Bereitstellungseinrichtungen, so daß sie eine erhebliche Länge aufweist. Eine einzige Überführeinrichtung mit zwei Bereitstellungseinrichtungen ist aber nicht geeignet, die gleichförmig hintereinander angeordneten Aufnahmebecher der Fördereinrichtung zu beschicken, da die Abstände ihrer Mitnehmer größer sein müssen als die Teilung der Aufnahmebecher der Fördereinrichtung. Es ist daher eine einfache Vorrichtung zum Transportieren von Gegenständen erstrebenswert, mit der in mehreren Linien zugeführte Gegenstände zu einer Linie zusammengefaßt überführt werden können.

### Vorteile der Erfindung

Die erfindungsgemäße Vorrichtung zum Transportieren von Gegenständen mit den kennzeichnenden Merkmalen des Anspruchs 1 hat den Vorteil, daß von mehreren Produktions- oder Gebermaschinen kommende Gegenstände nacheinander an einer einzigen Stelle in die Aufnahmebecher der Fördereinrichtung einer Verpackungsmaschine übergeben werden. Dadurch kann die Fördereinrichtung der Verpackungsmaschine kurz bemessen sein. Ferner kann die Überführeinrichtung synchron mit der Verpackungsmaschine angetrieben werden, was zur Verläßlichkeit und Betriebssicherheit der Anlage beiträgt.

Durch die in den Unteransprüchen aufgeführten Maßnahmen sind vorteilhafte Weiterbildungen und Verbesserungen der im Anspruch 1 angegebenen Vorrichtung möglich. Besonders vorteilhaft ist eine nach Anspruch 2 ausgebildete Vorrichtung, mit der eine direkte Verbindung einer Zwillings-Gebermaschine mit einer Verpackungsmaschine geschaffen ist.

### Zeichnung

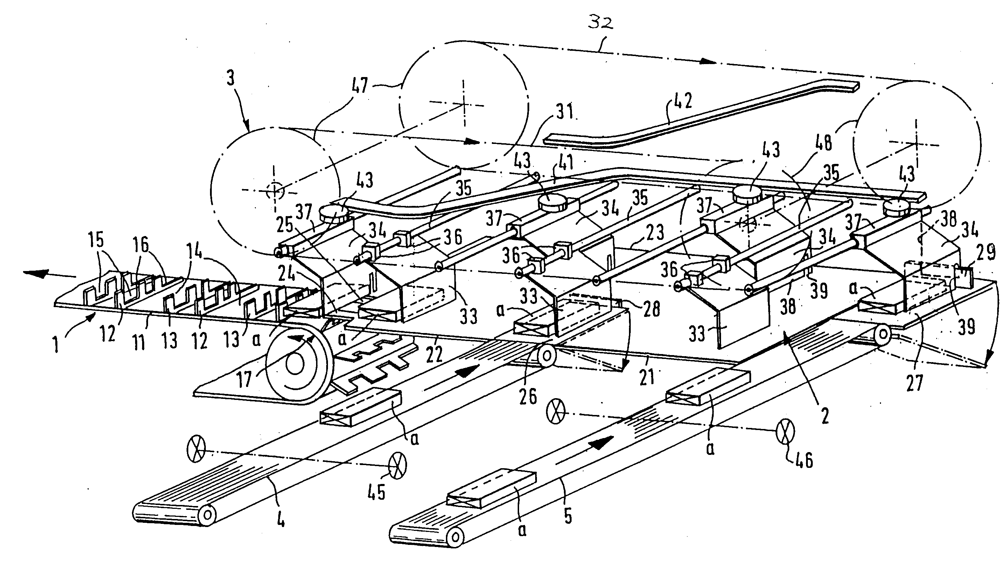

Eine Vorrichtung zum Transportieren von Gegenständen in eine Verpackungsmaschine ist in der Zeichnung dargestellt, die ein Ausführungsbeispiel vereinfacht in schaubildlicher Ansicht zeigt, und wird im folgenden näher beschrieben. Der Übersichtlichkeit halber sind sich wiederholende, leicht vorstellbare Teile teilweise weggelassen.

### Beschreibung des Ausführungsbeispiels

Zum Transportieren von Gegenständen a, beispielsweise von zwei Schlauchbeutelmaschinen kommende Beutel, die noch in eine Faltschachtel eingebracht werden sollen, sind am Eingabeende einer Fördereinrichtung 1 einer nicht näher dargestellten Kartoniermaschine eine Bereitstellungseinrichtung 2, eine Überführvorrichtung 3 und zwei Zuführbänder 4, 5 angeordnet. Die kontinuierlich angetriebene Fördereinrichtung 1 hat an endlosen Ketten 11 in gleichen Teilungsabständen Mitnehmerpaare 12, 13, welche Aufnahmebecher 14 für die zu verpackenden Gegenstände a bilden. Die wandförmigen Mitnehmer 12, 13 haben Aussparungen 15, 16. In Höhe oder etwas über der waagrechten Förderstrecke der Fördereinrichtung 1 und mit dieser ausgerichtet schließt an deren Eingabeende im Bereich einer Umlenkstrecke 17 ein waagrechter, langgestreckter Tisch 21 der Bereitstellungseinrichtung 2 an. An seinem der Fördereinrichtung 1 zugekehrten Ende hat der Tisch 21 Zähne 24, 25, die mit den Aussparungen 15, 16 der Mitnehmer 12, 13 der Aufnahmebecher 14 bei deren Durchlaufen der Umlenkstrecke kämmen. Seine eine Längskante 22, die auf der Seite der Zuführbänder 4, 5 liegt, erstreckt sich in Verlängerung der einen Längskante der Fördereinrichtung 1 und eine andere, dazu parallele Längskante 23 ist zur anderen Längskante der Fördereinrichtung 1 um mindestens die Länge eines Gegenstandes a versetzt. Der Tisch 21 ist etwa doppelt so breit wie die Aufnahmebecher 14 der Fördereinrichtung 1.

Die beiden die Gegenstände a von den Gebermaschinen zuführenden Zuführbänder 4, 5, die kontinuierlich oder variabel angetrieben sein können, erstrecken sich quer zum Tisch 21, und zwar auf der Seite mit der Längskante 22, die mit der Längskante der Fördereinrichtung 1 fluchtet. Das eine Zuführband 4 endet an der einen Längskante 22 ungefähr im mittleren Bereich des Tisches 21 vor einem ersten Bereitstellungsplatz 26. Das andere Zuführband 5 greift in eine halbseitige Aussparung des Tisches 21 und endet vor einem zweiten Bereitstellungsplatz 27 am verbleibenden Endbereich des Tisches 21. Die beiden Bereitstellungsplätze 26 und 27 sind am Tisch 21 sowohl längs als auch quer zu dessen Längserstreckung versetzt angeordnet. Sie sind zudem als nach unten abschwenkbare Fallen ausgebildet, so daß als fehlerhaft erkannte oder unrichtig zugeführte Gegenstände nach unten ausgeschieden werden können. In Zuführrichtung der Zuführbänder 4, 5 sind an den Bereitstellungsplätzen 26, 27 je ein Anschlag 28, 29 angeordnet, an denen die Gegenstände a beim Zuführen zur Anlage kommen und positioniert werden.

Zum lage- und zeitgerechten Überführen der auf den Bereitstellungsplätzen 26 und 27 plazierten Gegenstände a ist oberhalb des Tisches 21 die Überführeinrichtung 3 angeordnet. Diese hat an einem Förderkettenpaar 31, 32 in gleichmäßigen Abständen Mitnehmer 33, 34 in Form von abgewinkelten Platten. Die endlosen Förderketten 31, 32 sind um Umlenkräderpaare 47, 48 geführt, von denen das eine 47 parallel über der Achse der Umlenkstrecke 17 der Fördereinrichtung 1 und das andere über dem dem zweiten Überführungsband 5 zugeordneten Bereitstellungsplatz 27 angeordnet ist. Sie werden synchron mit der Fördereinrichtung 1 angetrieben.

Die Mitnehmer 33, 34 sind an Stangen 35 angeordnet, die sich quer zwischen den beiden Förderketten 31, 32 erstrecken und vorzugsweise einen Abstand voneinander haben, der der Teilung der Aufnahmebecher 14 der Fördereinrichtung 1 entspricht. Jeder zweite, zu einer ersten Gruppe gehörende Mitnehmer 33 ist mittels Klemmstücken 36 an den Stangen 35 befestigt, und zwar so, daß diese Mitnehmer 33 sich über dem Tisch 21 auf einer Spur bewegen, die mit der Förderstrecke der Fördereinrichtung 1 fluchtet und den ersten Bereitstellungsplatz 26 deckt; die jeweils dazwischen angeordneten, zu einer zweiten Gruppe gehörenden Mitnehmer 34 sind auf ihren Stangen 35 mit einem Gleitstück 37 verschiebbar gelagert, so daß ihnen während ihrer Förderbewegung zur Fördereinrichtung 1 hin zusätzlich eine Querbewegung überlagert werden kann, wobei die an dem der Fördereinrichtung 1 fernen Ende des Tisches 21 den zweiten Bereitstellungsplatz 27 bestreichenden und zur Spur der ersten Gruppe von Mitnehmern 33 laufenden Mitnehmer 34 auf ihrem Förderweg über den Tisch 21 von der versetzten Spur in die Spur der ersten Gruppe von Mitnehmern 33 eingereiht werden. Dadurch bestreichen alle Mitnehmer 33, 34 am Aufgabenende der Fördereinrichtung 1 dieselbe Übergabestelle.

Die Querbewegung der verschiebbaren Mitnehmer 34 wird bei deren Förderbewegung von einer ortsfesten, schräg gewinkelten Führungsschiene 41 erzeugt, an der mit den Gleitstücken 37 verbundene Rollen 43 ablaufen. Mit einer gegenläufig ausgebildeten Führungsschiene 42 am Rücklaufweg der Mitnehmer werden die verschiebbaren Mitnehmer 34 nach dem Überführen der Gegenstände a wieder in ihre versetzte Spur zurückgeschoben. Die Führungsschienen 41, 42 können auch als Kulissen ausgebildet sein.

Damit die von den quer verschiebbaren Mitnehmern 34 mitgenommenen Gegenstände a auch quer auf dem Tisch 21 verschoben werden, haben diese Mitnehmer 34 auf ihrer den Mitnehmern 33 der ersten Gruppe fernen Seite einen Anschlag oder eine Seitenwand 38, welche die Querbewegung auf die mitgenommenen Gegenstände a überträgt. Ferner haben sie nahe dieser Seitenwand 31 eine Aussparung 39, mit welcher der Anschlag 29 am Bereitstellungsplatz 27 kämmt.

Der Querverschiebeweg der Mitnehmer 34 der zweiten Gruppe, beziehungsweise der Abstand der beiden Bereitstellungsplätze 26, 27 quer zur Förderrichtung der Zuführeinrichtung 3 beträgt mindestens die Breite der Mitnehmer beziehungsweise die Länge der überführten Gegenstände a. Ferner beträgt der Abstand der Bereitstellungsplätze 26, 27 in Förderrichtung einen ungeraden Teilungsabstand, bespielsweise drei oder fünf Teilungsabstände der Mitnehmer 33, 34, so daß der Gegenstand a, der auf dem versetzten Bereitstellungsplatz 27 vom Zuführband 5 die Spur der Mitnehmer 33 der ersten Gruppe querend zugeführt wird, genügend Zwischenraum zwischen zwei aufeinanderfolgenden Mitnehmern 33 der ersten Gruppe vorfindet und daß in der Fördereinrichtung 1 alle Becher lückenlos belegt werden können.

Die oben beschriebene Vorrichtung arbeitet wie folgt:
Die von den Gebermaschinen produzierten Gegenstände a werden mit den Förderbändern 4, 5 auf die Bereitstellungsplätze 26, 27 am Tisch 21 gebracht. Dabei wird von Lichtschranken 45, 46 die zur Phase der Überführeinrichtung 3 richtige Lage überwacht; bei nicht phasenrichtiger Lage wird die Fördergeschwindigkeit des betreffenden Zuführbandes angepaßt oder die Falle des Bereitstellungsplatzes 26 bzw. 27 abgeschwenkt, so daß ein nicht phasenrichtig geförderter Gegenstand ausgeschieden wird. Die geförderten Gegenstände a werden auf die Bereitstellungsplätze 26, 27 geschoben, wo sie die Anschläge 28 bzw. 29 berührend plaziert werden. Darauf schieben die Mitnehmer 33 bzw. 34 die bereitgestellten Gegenstände a quer zu deren Zuführrichtung auf dem Tisch 21 zur Fördereinrichtung 1, wobei der von dem Mitnehmer 33 geführte Gegenstand a geradlinig und der vom anderen Mitnehmer 34 geförderte Gegenstand a zunächst geradlinig, dann schräg und schließlich wieder geradlinig zur Übergabestelle überführt werden und wobei der zunächst versetzt übernommene Gegenstand a zwischen geradlinig geförderte Gegenstände eingespurt wird. In der Übergabestelle, wo die Mitnehmer 12, 13 der Aufnahmebecher 14 der Fördereinrichtung 1 mit den Zähnen 24, 25 des Tisches 21 kämmen, werden die Gegenstände a nacheinander in die Aufnahmebecher 14 eingeschoben und von diesen zur Verpackungsstelle mitgenommen.

Das Übernehmen der Gegenstände a auf den Bereitstellungsplätzen von den Mitnehmern und/oder das Übergeben der Gegenstände a in die Aufnahmebecher der Fördereinrichtung kann noch verbessert werden, wenn auf die Mitnehmer in diesen Bereichen eine Schwenkbewegung zu dem Gegenstand hin bzw. von dem Gegenstand weg übertragen wird. Dies wird erreicht durch eine schwenkbare Anordnung der die Mitnehmer tragenden Stangen und durch ortsfeste Führungsschienen, von denen mit den Stangen verbundene Hebel verschwenkt werden.

Dies ist vor allem bei den Mitnehmern 33 von Bedeutung, wenn sie über dem Zuführband 5 hinweglaufen sollen.

Bei dem oben beschriebenen Ausführungsbeispiel ist ein Überführen mit zwei Bereitstellungsplätzen und zwei Gruppen von Mitnehmern beschrieben. Es ist im Rahmen der Erfindung auch möglich, auch mehr als zwei Gruppen von Mitnehmern in mehr als zwei Spuren anzuordnen, so daß von mehr als zwei Gebermaschinen kommende Gegenstände in eine einzige Reihe überführt werden können. Dazu sind die Mitnehmer einer Gruppe fest und die Mitnehmer der anderen Gruppen quer verschiebbar an der Zuführeinrichtung anzuordnen, wobei die Verschiebewege der einzelnen Gruppen verschieden sind.

Weiterhin ist es auch denkbar, alle Mitnehmer quer verschiebbar an der Zuführeinrichtung anzuordnen. Dies ist sinnvoll, wenn wie im Ausführungsbeispiel mit zwei Gruppen und zwei Spuren von Mitnehmern 33, 34 die Fördereinrichtung 1 nicht wie dargestellt mit der Längskante 22 fluchtend am Tisch 21 angeordnet ist.

Schließlich wird darauf hingewiesen, daß die Zuführbänder, die die Gegenstände von den verschiedenen Gebermaschinen heranbringen, nicht nur quer zur Förderrichtung der Überführeinrichtung, sondern auch längs zu dieser angeordnet sein können.

## Patentansprüche

1. Vorrichtung zum Transportieren von Gegenständen von mehreren Gebermaschinen in gleichförmig beabstandete Aufnahmen einer kontinuierlich laufenden Fördereinrichtung (1) einer Verpackungsmaschine mit mehreren die Gegenstände von den Produktionsmaschinen zu Bereitstellungsplätzen (26, 27) führenden Zuführeinrichtungen (4, 5) und mit einer die Gegenstände von den Bereitstellungsplätzen in die Aufnahmen der Fördereinrichtung mittels Mitnehmern (33, 34) uberführenden, endlosen Überführeinrichtung (3), dadurch gekennzeichnet, daß die Bereitstellungsplätze (26, 27) an einem gemeinsamen, vor der Fördereinrichtung (1) sich erstreckenden Tisch (21) in dessen Längsrichtung nebeneinander versetzt angeordnet sind, wobei die Längsrichtung des Tisches (21) der Förderrichtung der Fördereinrichtung (1) entspricht, und daß die Mitnehmer (33, 34) der sich längs zum Tisch (21) ausgerichteten Überführeinrichtung (3) wenigstens zum Teil quer zu deren Laufrichtung verschiebbar angeordnet sind sowie im Bereich der Breitstellungsplätze (26, 27) in mehreren Spuren nebeneinander und vor der Fördereinrichtung (1) in einer gemeinsamen Spur geführt werden.

2. Vorrichtung nach Anspruch 1, dadurch gekennzeichnet, daß jeder zweite Mitnehmer (34) quer verschiebbar an der Überführeinrichtung (3) angeordnet ist.

3. Vorrichtung nach Anspruch 1 oder 2, dadurch gekennzeichnet, daß die quer verschiebbaren Mitnehmer (34) der Überführeinrichtung (3) auf Stangen (35) gelagert sind, die sich quer an endlosen Förderketten (31, 32) der Überführeinrichtung erstrecken.

4. Verpackungsmaschine nach einem der Ansprüche 1 bis 3, dadurch gekennzeichnet daß die quer verschiebbaren Mitnehmer (34) von stationären Führungsschienen (41, 42) während ihrer Förderbewegung mit der Fördereinrichtung (3) quer bewegt werden.

## Claims

1. Device for transporting objects from a plurality of delivery machines into equally spaced-apart receptacles of a continuously running conveying means (1) of a packaging machine, having a plurality of feeding means (4, 5), conducting the objects from the production machines to supply positions (26, 27), and having an endless transferring means (3), transferring the objects from the supply positions into the receptacles of the conveying means by means of drivers (33, 34), characterized in that the supply positions (26, 27) are arranged at a common table (21), which extends in front of the conveying means (1), offset next to one another in the longitudinal direction of the said table, the longitudinal direction of the table (21) corresponding to the conveying direction of the conveying means (1), and in that the drivers (33, 34) of the transferring means (3), which is aligned longitudinally with respect to the table (21), are arranged at least partly such that they can be displaced transversely with respect to the running direction of the said transferring means and are guided in the region of the supply positions (26, 27) in a plurality of tracks next to one another and are guided in front of the conveying means (1) in a common track.

2. Device according to Claim 1, characterized in that every second driver (34) is arranged transversely displaceably on the transferring means (3).

3. Device according to Claim 1 or 2, characterized in that the transversely displaceable drivers (34) of the transferring means (3) are mounted on rods (35), which extend transversely on endless conveying chains (31, 32) of the transferring means.

4. Packaging machine according to one of Claims 1 to 3, characterized in that the transversely displaceable drivers (34) are moved transversely by stationary guide rails (41, 42) during their conveying movement with the conveying means (3).

## Revendications

1. Dispositif pour transporter des objets délivrés par plusieurs machines de production jusqu'à des réceptacles régulièrement espacés du transporteur à bande continue (1) d'une machine d'emballage comportant plusieurs dispositifs (4, 5) amenant les objets sortant des machines de production à des postes de mise à disposition (26, 27) d'où ces objets sont transférés par des entraîneurs (33, 34) aux réceptacles du dispositif de transport, dispositif caractérisé en ce que les postes de mise à disposition (26, 27) sont disposés sur une table (21) située en amont du transporteur, et sont décalés successivement selon la direction longitudinale de cette table, correspondant ellemême à celle du transporteur (1), en ce que les entraîneurs (33, 34) appartenant au dispositif de transfert (3) disposé le long de la table (21) peuvent, au moins partiellement, coulisser transversalement par rapport au mouvement du dispositif de transfert, et sont ramenés en une file unique commune à l'entrée du transporteur (1), selon plusieurs files côte à côte au niveau des postes de mise à disposition (26, 27).

2. Dispositif selon la revendication 1, caractérisé en ce qu'un entraîneur (34) sur deux, dans l'ordre successif, peut coulisser transversalement sur le dispositif de transfert (3).

3. Dispositif selon la revendication 1 ou 2, caractérisé en ce que les entraîneurs (34) à coulissement transversal sont montés sur des tiges (35) appartenant au dispositif de transfert (3) et reliant transversalement les chaînes sans fin (31, 32) assurant le déplacement de ce dispositif.

4. Machine d'emballage selon une des revendications 1 à 3, caractérisée en ce que les entraîneurs (34) à coulissement transversal effectuent ce coulissement par l'action combinée de rails de guidage fixes (41, 42) et du mouvement d'avance du dispositif de transfert (3).
